# EUROPÄISCHE PATENTSCHRIFT

(11) **EP 1 407 814 B1**
(45) Veröffentlichungstag und Bekanntmachung des Hinweises auf die Patenterteilung: **07.05.2014**
(21) Anmeldenummer: 02021923.4
(22) Anmeldetag: 28.09.2002
(51) Int. Cl.: B01J 2/16

(54) **Verfahren und Vorrichtung mit Wirbelschichtanlage zur Herstellung von Granulaten**
Process and apparatus with a fluidised bed apparatus for producing granules
Procédé et appareillage mettant en oeuvre un lit fluidisé pour fabriquer des granules

(43) Veröffentlichungstag der Anmeldung: 14.04.2004
(73) Patentinhaber: Glatt Ingenieurtechnik GmbH, D-99427 Weimar (DE)
(72) Erfinder: Jacob, Michael, 99427 Weimar (DE); Rümpler, Karlheinz Dr., 99425 Weimar (DE); Waskow, Mike, 99423 Weimar (DE)
(74) Vertreter: Maucher, Wolfgang

(56) Entgegenhaltungen:
- WO-A-01/37980
- DE-A- 3 323 418
- DE-A- 19 700 029
- US-A- 3 241 520
- US-A- 4 858 552
- US-A- 5 437 889

## Beschreibung

Die Erfindung betrifft ein Verfahren und die dazugehörige Wirbelschichtanlage zur Herstellung von kompakten Feststoffpartikeln gemäß der im Oberbegriff der Ansprüche 1 und 5 genannten Merkmale.

Wirbelschichtanlagen zur Behandlung von unterschiedlichen Materialien sind allgemein bekannt. So ist zum Beispiel gemäß der DD 119 304 bekannt, Flüssigkeiten mittels Düsen auf eine Wirbelschicht aufzusprühen. Die Wirbelschichtanlage besteht dabei aus einem mit Öffnungen versehenen Wirbelboden, dem von unten Trocknungs- und Fluidisierungsluft zugeführt wird.

Dazu sind unterschiedliche Ausführungen sowohl hinsichtlich der Gestaltung der Wirbelschichtanlage als auch der Zuführung des Bedüsungsmaterials bekannt. Die Wirbelschichtanlage kann dabei sowohl rund als auch rechteckig als Wirbelrinne oder als Fließbettapparat ausgebildet sein. Die Bedüsung des in der Wirbelschicht vorhandenen Materials mit entsprechenden Materialien kann von oben auf die Wirbelschicht (top-spray) oder von unten in die Wirbelschicht hinein (bottom-spray) oder von der Seite erfolgen. Die Sprühflüssigkeit kann als Lösung, Suspension, Emulsion, Schmelze oder als jedes andere pump- und verdüsungsfähige Flüssigsystem vorliegen.

Aus der DE 197 00 029 A1 ist ein Wirbelschichtapparat bekannt, bei dem die Regelung der Materialeigenschaften des Endprodukts durch über dem Anströmboden angeordnete Einbauten erfolgt. Durch die Einbauten von speziell gestalteten Wehren erfolgt eine Beeinflussung des Materialkreislaufes in der Wirbelschicht und damit eine Beeinflussung der Materialeigenschaften der herzustellenden Materialien. Dabei wird ausdrücklich eine Agglomeration der einzelnen Materialteilchen gewünscht.

Aus der EP 0 163 836 B1 ist ein Verfahren zur Herstellung von Granulaten bekannt, bei dem die Keime der Wirbelschicht durch interne Produkte erzeugt werden. Durch Integration von Staubabscheidern im Wirbelschichtapparat werden Stäube und Feinpartikel in den flüssigkeitsbedüsten Bereich der Wirbelschicht zurückgeführt. Diese Materialien bilden in der Wirbelschicht entsprechende Agglomerate.

Bei den beschriebenen Anlagen entstehen hauptsächlich gewollte Agglomerate. Die Agglomerate weisen eine raue Oberflächenstruktur auf und die Rundheit der einzelnen Partikel ist nicht voll ausgeprägt. Bei der Herstellung fester Produktformen ist es in vielen Anwendungsfällen notwendig, genau definierte Partikelstrukturen herzustellen. Für viele Applikationen erweisen sich Granulate als vorteilhaft, die durch Aufbaugranulation in der Wirbelschicht hergestellt werden können. Bei diesen Granulaten wird besonders auf eine kompakte Struktur bei sehr guter Rundheit und glatter Teilchenoberfläche Wert gelegt.

Um diese speziellen Materialmerkmale zu erzeugen, ist der Einsatz von Steigrohren in Chargenapparaten zur Beschichtung von beispielsweise Tabletten gemä3 der US 3 089 824, US 3 241 520 und US 3 253 944 bekannt. Aus der US 3 241 520 ist dabei eine Hintereinanderschaltung von vielen Einzelapparaten bekannt, bei der das Austrittsmaterial der vorhergehenden Stufe das Eintrittsmaterial in die nächste Stufe ist. Der beschriebene Coatingprozess wird hier in Einzelapparate zergliedert. Die Anlage ist sehr aufwendig und weist eine komplizierte Geometrie auf.

Durch die Anmelderin wurde bereits eine ältere Anmeldung zum Beschichten (Coaten) von Partikeln in kontinuierlicher Prozessführung gemäß der DE-Anmeldung 101 30 334 vorgeschlagen. Dabei wird das Coatingmaterial kontinuierlich in wenigstens zwei unterschiedliche Bereiche auf die Wirbelschicht aufgetragen.

Aus der WO-A-0137980 ist bereits eine vorrichtung zum Beschichten von Partikeln bekannt, mit der große Partikel mit unterschiedlichen geometrischen Formen, die auch Ecken und Kanten aufweisen können, mit einer gleichmäßigen Schichtdicke zu beschichten sind. Die vorbekannte Vorrichtung besteht dazu aus einem Behälter mit nur einem innenliegenden Stützrohr, in dem die Beschichtungszone ausgebildet ist und eine außenliegende Rückfuhrzone. Die Beschichtung erfolgt in dem Behälter chargenmäßig.

Eine vergleichbare Vorrichtung ist auch aus der US-A-5437889 vorbekannt.

Aus der DE-A-3323418 kennt man bereits ein diskontinuierliches Verfahren zur Beschichtung von Tabletten. Bei der aus DE-A-3323418 vorbekannten Vorrichtung sind dazu mehrere nebeneinander angeordnete Steigrohre dargestellt, die aber nur zur Durchsatzsteigerung dienen. Eine Materialführüng von einem zum anderen Bereich erfolgt hierbei nicht.

Aus der US-A-4858552 ist ein Verfahren und eine Winbelschichtanlage zum Pelletieren von Teilchen vorbekannt, bei der im oberen Bereich des Wirbelschichtbehälters zumindest eine Rotorscheibe angeordnet ist. Im Wirbelschichtbehählter befindet sich zumindest ein Steigrohr, das die Ausbildung einer umwälzenden Wirbelschicht begünstigen soll. Ein in den Wirbelschichtbehälter chargenweise eingebrachtes Ausgangamaterial wird im Steigrohr derart hochgerissen, dass es dabei in Kontakt mit einem aus einer Sprühdüse austratenden Sprühnebel kommt, der Feststoff-Anteile und Binder enthält, bevor die etwas plastischen Teilchen dann am oberen Bereich der Wirbelschicht gegen die sich drehende Rotorscheibe, geführt werden können, an deren Unterseite sie dann radial nach außen abgeleitet und wieder dem unteren Eintrittsbereich beim Steigrohr zugeführt werden können. Dabei kann der Gasstrom auch in zwei getrennten Gas-Teilströmen zugeführt werden, wobei im zentralen Bereich ein Teilstrom mit einer zum Aufcoaten höheren Temperatur zugeführt wird, während in dem umgrenzenden Ringbereich der zweite Teilstrom kühlere Luft führt, um das Behandlungsgut soweit verfestigen zu können, dass eine plastische Verformung an der Rotorscheibe möglich ist.

Die Aufgabe der Erfindung besteht darin, ein Verfahren und die Wirbelschichtanlage zur Herstellung von kompakten Feststoffpartikeln so zu gestalten, dass entsprechend den Anwendungsfällen ein durch Aufbaugranulation oder Beschichten (Coaten) hergestelltes Endprodukt mit definierten Partikelstrukturen unter Vermeidung von Agglonerationseffekten entsteht.

Entsprechend des erfindungsgemäßen Verfahrens wird die Aufgabe mit den Merkmalen des Anspruches 1 und der dazugehörigen Vorrichtung gemäß den Merkmalen des Anspruchs 5 gelöst. Vorteilhafte Ausgestaltungen des Verfahrens und der Vorrichtung sind in den Unteransprüchen angegeben.

Durch die Beaufschlagung von dem zu behandelnden Material in einem Bereich mit einer höheren Strömungsgeschwindigkeit und in Verbindung mit einer Partikelzirkulation zwischen diesem Bereich und der Wirbelschicht wird eine Agglomeration des Materials vermieden. Durch die Partikelzirkulation und durch den Aufbau eines expandierenden Bereichs infolge der höheren Strömungsgeschwindigkeiten entstehen definierte Partikelstrukturen unter Vermeidung von Agglomerationseffekten.

Durch die Anordnung von Einbauteilen im Prozessraum der Wirbelschichtanlage über den Düsen des Sprühsystems wird eine Vergleichmäßigung der Granulation erreicht. Unterstützt wird dieses einerseits durch die Anordnung der Einbauteile in einem Abstand über dem Wirbelschichtboden und andererseits durch das größere Öffnungsverhältnis der Gasdurchtrittsöffnungen des Wirbelschichtbodens unterhalb der Einbauteile gegenüber den übrigen Gasdurchtrittsöffnungen des Wirbelschichtbodens. In den aufwärts gerichteten Luftströmungen in den Einbauteilen werden die zu granulierenden oder zu coatenden Partikel weitestgehend im Luftstrom dispergiert, so dass sie als Einzelpartikel mit Flüssigkeit besprüht werden können. Die Flüssigkeit verdampft, die Granulate wachsen, beziehungsweise es bildet sich eine geschlossene Hülle aus Coatingmaterial um die Teilchen. Es entsteht unter Vermeidung von Agglomerationseffekten ein Endprodukt mit einer definierten Partikelstruktur. Durch Anordnung von mehreren, in der Länge des Wirbelschichtbodens angeordneten Einbauteilen wird die Korngröße des herzustellenden Materials beeinflusst.

Durch Einstellung des Abstandes der Unterkante der Einbauteile von dem Wirbelschichtboden, des Öffnungsverhältnisses der Gasdurchtrittsöffnungen des unter den Einbauteilen angeordneten Wirbelschichtbodens und der Höhe und des Durchmessers bzw. der Breite der Einbauteile in Abhängigkeit von den herzustellenden Feststoffpartikeln wird die Materialbildung in der Wirbelschicht und in den Einbauteilen so beeinflusst, dass unerwünschte Agglomerationseffekte weitestgehend vermieden werden und die herzustellenden Produkte entsprechend den Anforderungen eine genau definierte Partikelstruktur aufweisen.

Die Erfindung wird anhand von Ausführungsbeispielen näher erläutert. In den dazugehörigen Zeichnungen zeigen:
- Fig. 1: eine schematische Schnittdarstellung der erfindungsgemäßen Wirbelschichtanlage in rechteckiger Ausführung,
- Fig. 2: eine schematische Schnittdarstellung der erfindungsgemäßen Wirbelschichtanlage in runder Ausführung,
- Fig. 3: eine Variante gemäß Figur 1,

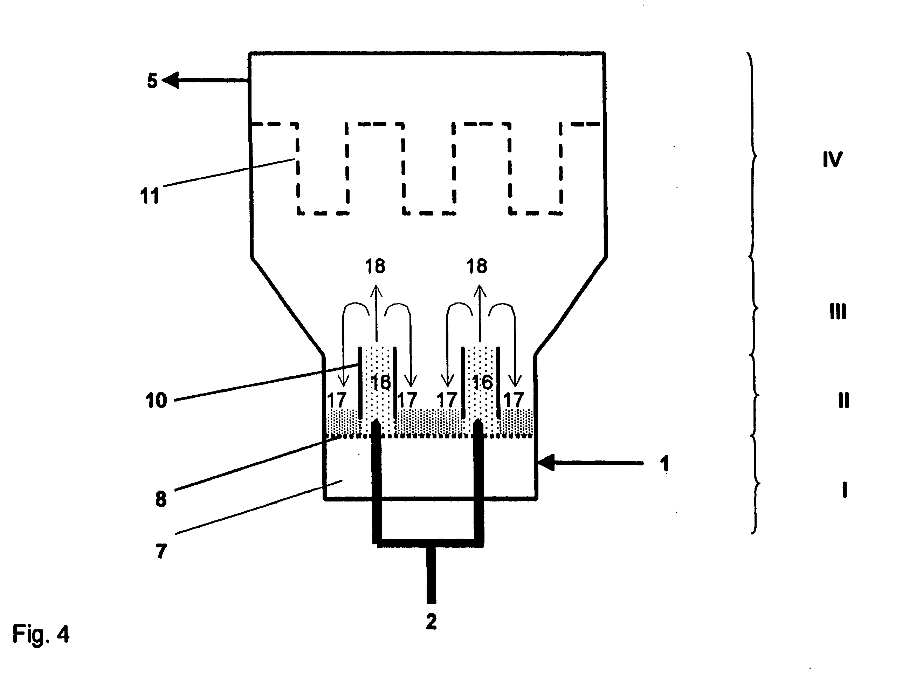

- Fig. 4: einen Querschnitt gemäß Figur 1 mit rund ausgeführten Einbauteilen,
- Fig. 5: einen Querschnitt gemäß Figur 1 mit rechteckig ausgeführten Einbauteilen,
- Fig. 6: eine weitere Variante gemäß Figur 1.

Die Herstellung der Produkte in Granulatform erfolgt durch Wirbelschichtgranulation (Aufbaugranulation, Layering) in einer im wesentlichen horizontal ausgerichteten Wirbelschicht 9. Die Wirbelschichtanlage zur Herstellung von kompakten Feststoffpartikeln besteht aus einem mit Gasdurchtrittsöffnungen versehenen Wirbelschichtboden 8, dem über eine Zuluftkammer 7 ein Sprühsystem 13 mit entsprechenden Düsen zugeordnet ist. Im Prozessraum II der Wirbelschichtanlage sind über dem Bereich der Düsen des Sprühsystems 13 Einbauteile 10 zur Abgrenzung des Bedüsungsbereiches angeordnet, deren jeweilige untere Kante von der Oberfläche des Wirbelschichtbodens 8 beabstandet ist und deren jeweilige obere Kante in einem Abstand über der Oberfläche der Wirbelschicht 9 endet, beziehungsweise bis in den Entspannungsraum III der Wirbelschichtanlage ragt. Der Abstand der Unterkante der Einbauteile 10 von dem Wirbelschichtboden 8, das Öffnungsverhältnis der Gasdurchtrittsöffnungen des unter den Einbauteilen 10 angeordneten Wirbelschichtbodens 8 und die Höhe und der Durchmesser bzw. die Breite der Einbauteile 10 sind in Abhängigkeit von den herzustellenden Feststoffpartikeln variabel einstellbar. Entsprechend den technischen Gegebenheiten ist es möglich, die Einbauteile 10 in einem gegenüber der Senkrechten vorbestimmten Winkel anzuordnen.

Der unterhalb der Einbauteile 10 befindliche Wirbelschichtboden 8 ist mit Gasdurchtrittsöffnungen versehen, dessen Öffnungsverhältnis größer ist als im übrigen Bereich der des Wirbelschichtbodens 8. Die Einbauteile 10 weisen entsprechend den in der Wirbelschicht 9 herrschenden Bedingungen einen runden, rechteckigen, quadratischen oder mehreckigen Querschnitt auf .

Beim kontinuierlichen Coaten von pulverförmigen bis feinkörnigen Feststoffpartikeln sind an der Decke der Wirbelschichtanlage Trennbleche 24 angeordnet, die in dem Entspannungsraum III der Wirbelschichtanlage im Bereich zwischen jeweils zwei Einbauteile 10 ragen und oberhalb der Einbauteile 10 enden.

Die Wirkungsweise der erfindungsgemäßen Wirbelschichtanlage ist folgende:

Zur Herstellung von kompakten Feststoffpartikeln in Granulatform mittels Wirbelschichtgranulation wird ein flüssiger Rohstoff 2 über die Düsen des Sprühsystems 13 in die Wirbelschicht 9 eingebracht. Die im Prozessraum II enthaltenen Teilchen werden durch einen aufwärts gerichteten Luftstrom 1 aufgewirbelt. Diese Strömung dient nicht nur zur Ausbildung der Wirbelschicht 9 selbst, sondern sie bildet gleichzeitig das Trocknungs- oder Kühlmittel, je nachdem ob die Trocknung einer Flüssigkeit, die als Lösung, Suspension oder Emulsion vorliegt, oder eine Kristallisation o.ä. herbeizuführen ist, bei dem der flüssige Rohstoff als Schmelze oder dergleichen vorliegt. Der zugeführte Luftstrom gelangt durch ein Zuluftgehäuse I in die Wirbelschichtanlage. Das Zuluftgehäüse I ist in mehrere Zuluftkammern 7 unterteilt, um eine gerichtete Strömung oder verschiedene Luftmengen einstellen zu können. Die Abgrenzung des Zuluftgehäuses I vom Prozessraum II wird durch den Wirbelschichtboden 8 gebildet, der zur Vergleichmäßigung der Luftströmung über den Apparatequerschnitt und zur Verhinderung eines Hindurchfallens der Wirbelschichtmasse in das Zuluftgehäuse I dient. Im Falle einer Aufbaugranulation durch thermische Trocknung in der Wirbelschicht 9 erfolgt eine Aufdüsung des flüssigen Rohstoffes 2 auf die in der Wirbelschicht 9 enthaltenen Teilchen. Auf deren Oberfläche verdampft die Flüssigkeit, und der Feststoff des eingedüsten Rohstoffes 2 bleibt auf den Partikeln haften, was zu einem nahezu schalenartigen Kornwachstum führt.

Die verdampfte Flüssigkeit wird mit dem nun abgekühlten Fluidisierungsmittel aus dem Prozessraum II über den Entspannungsraum III und dem Abscheideraum IV aus der Wirbelschichtanlage als Abluft 5 abgeführt. Da es infolge der intensiven Vermischung und Teilchenbewegung im Bereich der Wirbelschicht 9 zur Entstehung von Abrieb und somit von Feinstaubbildung kommt, ist eine Entstaubung des Abluftstromes notwendig, die sowohl extern außerhalb der eigentlichen Wirbelschichtanlage als auch in einem innerhalb der Wirbelschichtanlage integrierten Abscheideraum IV erfolgen kann. Es sind auch Kombinationen beider Varianten denkbar, bei denen eine Vorabscheidung in der Wirbelschichtanlage erfolgt und dazu nachgeschaltet außerhalb der Wirbelschichtanlage eine Feingutabtrennung stattfindet.

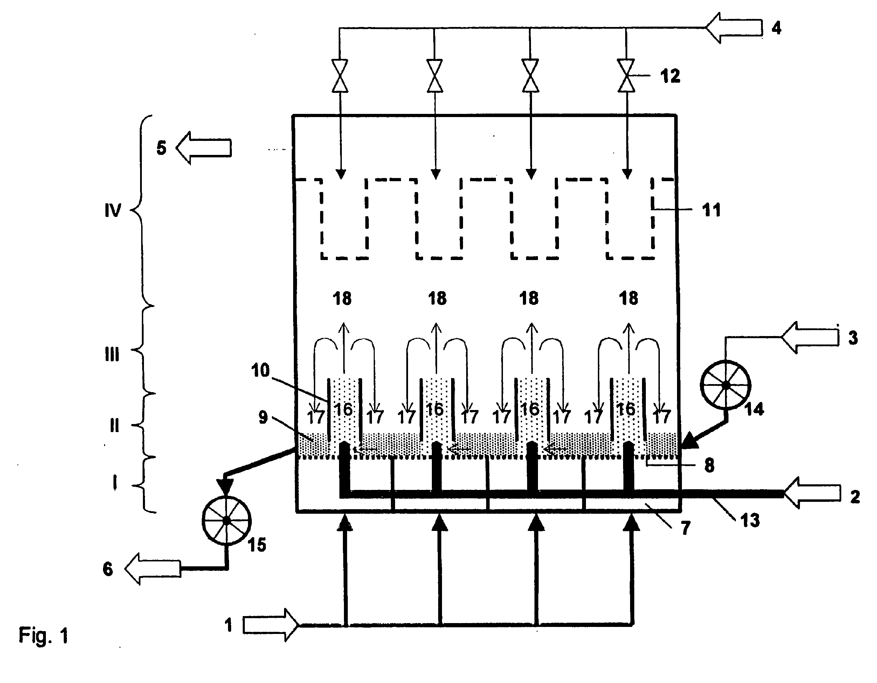

In der Figur 1 ist ein innenliegendes Filter 11 angedeutet, welches über einen Abreinigungsmechanismus 12, beispielsweise durch Druckluft 4 im Bedarfsfall oder zeitgesteuert abgereinigt wird. Der dabei abgeschiedene Staub fällt in die Wirbelschicht 9 zurück, wo er als Granulationskeime verwendet wird, dem der flüssige Rohstoff 2 aufgedüst wird. Alternativ oder parallel dazu können Granulationskeime 3 von außen zugeführt werden. Diese können durch Mahlung eines Teilstroms des Fertigprodukts 6 oder durch Überkornabtrennung gewonnen werden.

Weiterhin ist auch zeitgleich oder alternativ die Einbringung von Fremdmaterial aus anderen Prozessen denkbar, wenn beispielsweise ein Startkorn mit einer anderen Komponente umhüllt werden soll. Dieser Prozess wird als Coating, Beschichten oder Verkapselung bezeichnet und stellt einen Sonderfall der Aufbaugranulation dar.

Wenn Keime von außen in die Wirbelschichtanlage eingebracht werden, ist in den meisten Anwendungsfällen ein Druckabschluss zwischen dem Innenraum der Wirbelschichtanlage und der Umgebung notwendig. Dieses erfolgt beispielsweise durch eine Zellenradschleuse 14 oder durch ein Doppelklappensystem. In anderen Fällen kann der Eintrag auch offen erfolgen. Der Austrag des Fertigprodukts 6 kann auf verschiedene Weise erfolgen. In dem Ausführungsbeispiel erfolgt der Materialaustrag über eine drehzahlverstellbare Zellenradschleuse 15, die je nach Drehzahl und Kammervolumen einen definierten Volumenstrom aus der Wirbelschicht 9 abzieht und dabei den Druckabschluss gewährleistet.

Weitere Varianten können die verschiedensten Wehreinbauten am Ende der Wirbelschicht 9 darstellen. So lässt sich beispielsweise durch ein Überlaufwehr sehr einfach die Wirbelschichthöhe konstant halten.

Innerhalb der Wirbelschichtanlage werden durch die Anordnung und Gestaltung von Einbauten in Form von Einbauteilen 10 optimale Prozessbedingungen für die Granulation eingestellt. Die Einbauteile 10 beeinflussen die Vergleichmäßigung der Granulation. Unter jedem Einbauteil 10 ist eine Düse angeordnet, durch die Granulations- oder Coatingflüssigkeit eingedüst wird. Die Einbauteile 10 haben einen Abstand vom Wirbelschichtboden 9, so dass die Feststoffpartikel der Wirbelschicht 9 infolge der höheren Strömungsgeschwindigkeit in den Einbauteilen 10 angesaugt, nach oben geführt und dabei durch die Sprühflüssigkeit im Bedüsungsbereich 16 bedüst werden. In den aufwärts gerichteten Luftströmungen in den Einbauteilen 10 werden die zu granulierenden oder zu coatenden Partikel weitestgehend im Luftstrom dispergiert, so dass sie als Einzelpartikel mit Flüssigkeit besprüht werden können. Die Flüssigkeit verdampft, die Granulate wachsen, beziehungsweise es bildet sich eine geschlossene Hülle aus Coatingmaterial um die Teilchen.
Der Wirbelschichtboden 8 hat im Bereich unter den Einbauteilen 10 ein höheres Öffnungsverhältnis als im übrigen Bereich. Dadurch kommt es zu höheren Strömungsgeschwindigkeiten in den Einbauteilen 10. Diese Strömungsgeschwindigkeit richtet sich nach der Partikelgröße und -dichte.

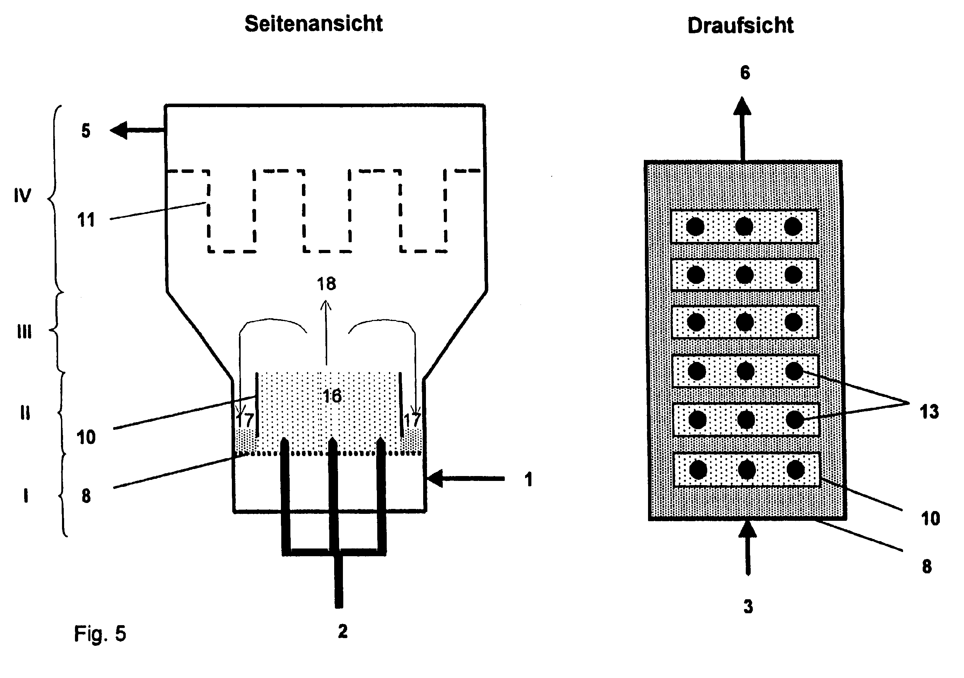

Bei technisch interessanten Wirbelschichtanlagen dieser Art werden zumeist mehrere Düsen nebeneinander über die Breite des Wirbelschichtbodens 8 installiert. Die Einbauteile 10 können dann als Einbauten mit rechteckigem Querschnitt ausgeführt werden und erfassen alle Düsen, die nebeneinander angeordnet sind. In Figur 5 ist eine derartige Anordnung dargestellt.

Nach dem Durchlaufen durch die Einbauteile 10 fallen die Feststoffpartikel außerhalb der Einbauteile 10 im Bereich der Partikelzirkulation 17 auf den Wirbelschichtboden 9 und werden wieder vom aufwärts gerichteten Gasstrom der Einbauteile 10 erfasst. So wiederholt sich der Prozess über die Länge der Wirbelschicht 9 mehrfach, bis die Teilchen hinreichend groß sind beziehungsweise die Coatingschicht hinreichend dick ausgebildet ist.

Die zwangsgeführte Materialströmung dient dazu, gleichmäßig aufgebaute Granulate zu erzielen. Eine Agglomeration zwischen den Partikeln wird, insbesondere solange sie feinkörnig sind, vermieden. Im Fall des Coatings werden hohe Ansprüche an die Qualität erzielt. Geschlossene Coatingoberflächen oder das Aufbringen einer Feststoffmatrix auf die Partikel sind möglich. Für den Fall des Coating wird in der Regel auf externe Staubfilter orientiert. Der wenig anfallende Staub kann so einfach aus dem System ausgetragen und anderweitig eingesetzt werden, ohne die Produktqualität des Endproduktes im Fall der Rückführung in die Wirbelschicht 9 zu vermindern.

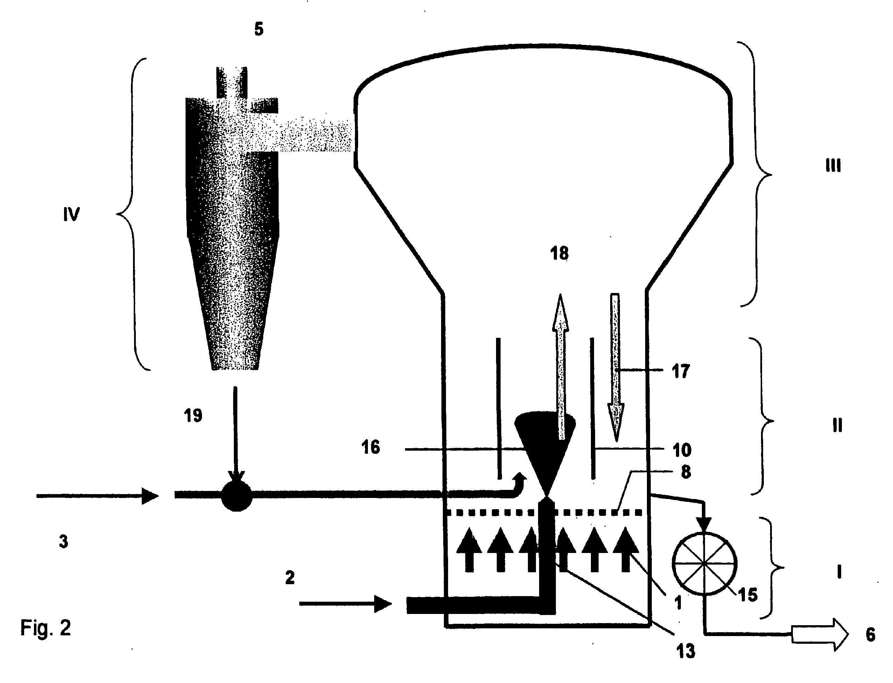

In Figur 2 ist eine Wirbelschichtanlage in runder Ausführung dargestellt. Bei dieser Ausführung befindet sich das Einbauteil 10 zentral in der Mitte des Wirbelschichtbodens 8. Bei einer entsprechenden Größe der Wirbelschichtanlage sind mehrere Einbauteile 10 um das mittig angeordnete Einbauteil 10 auf einem äußeren Kreisring gleichmäßig verteilt angeordnet. Die Mitte kann aber auch frei gelassen werden, so dass die Einbauteile 10 flächenmäßig über den Wirbelschichtboden 8 gleichmäßig verteilt werden.

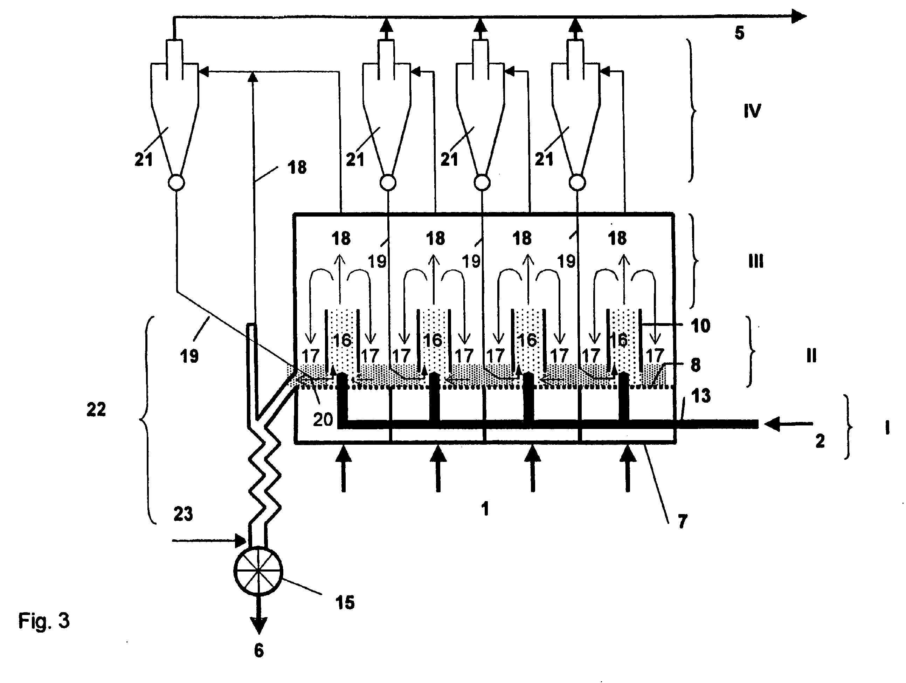

In Figur 3 ist eine rechteckige Wirbelschichtanlage zum kontinuierlichen Granulieren von feststoffhaltiger Flüssigkeit, die über ein Sprühsystem 13 eingetragen wird, dargestellt. Über jeder Düse des in bottom-spray arbeitenden Sprühsystems 13 ist ein Einbauteil 10 in einem gewissen Abstand über dem Wirbelschichtboden 8 angeordnet. Der aus den Zyklonabscheidern 21 zurückgeführte Staub 19 wird in den Bedüsungsbereich 16 unter dem Einbauteil 10 eingebracht und dient als Keimmaterial für die durchzuführende Granulation. Das aus den Zyklonabscheidern 21 zugeführte Material wird gemeinsam mit einem Teil des Materials aus der Wirbelschicht 9 durch die Gasströmung im Einbauteil 10 angesaugt und im Gasstrom dispergiert und mit flüssigem Rohstoff 2 durch das Sprühsystem 13 besprüht. Die staubhaltige Abluft 18 gelangt wieder zu den Zyklonabscheidern 21 und wird dort entstaubt. Die gewachsenen Partikel werden mit dem Luftstrom 1 aus dem Einbauteil 10 ausgetragen und gelangen über die Partikelzirkulation 17 wieder in die Wirbelschicht 9 außerhalb der Einbauteile 10. Bei Erreichung einer entsprechenden Partikelgröße wird das Material über den Granulataustrag 20 ausgetragen. Wenn die Materialpartikel noch nicht die erforderliche Größe erreicht haben werden sie wieder durch die im Einbauteil 10 herrschende Gasströmung angesaugt und im Einbauteil 10 weiter aufgranuliert. Das über den Granulataustrag 20 ausgetragene Material wird in einem an sich bekannten, mit Sichtluft 23 betriebenen Zick-Zack-Sichter 22 klassiert. Das Fertigprodukt wird über die Zellenradschleuse 15 ausgetragen, während die staubhaltige Abluft 18 einem Zyklonabscheider 21 zugeführt wird.

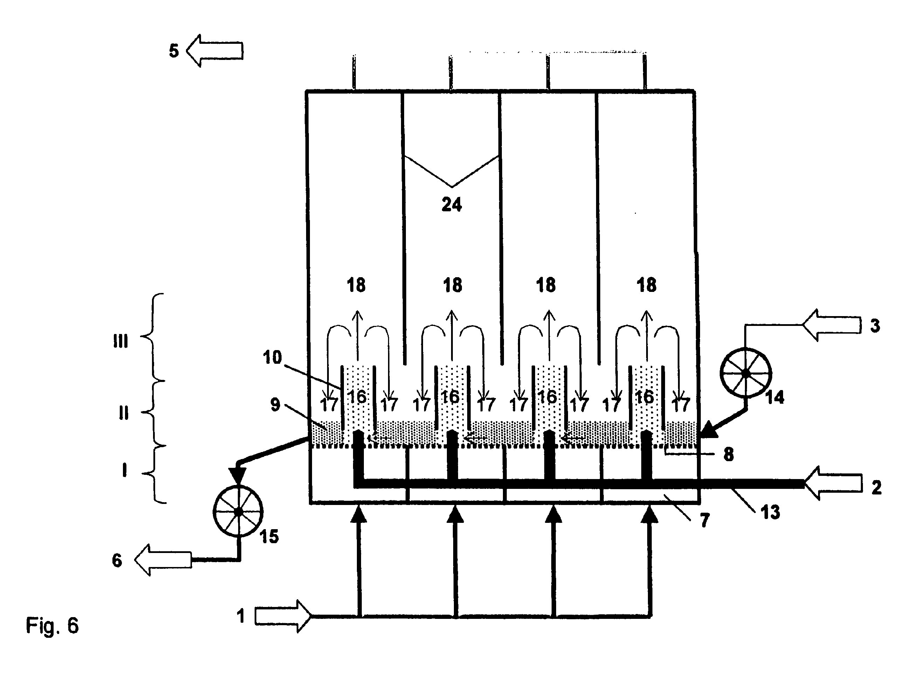

In der Figur 6 ist eine Wirbelschichtanlage mit rechteckiger Geometrie zum kontinuierlichen Coaten von pulverförmigen bis feinkörnigen Feststoffpartikeln dargestellt. Auf ein integriertes Abscheidesystem für anfallenden Staub wird verzichtet, weil dadurch die Coatingqualität verschlechtert wird. Staub wird mit der Abluft 5 aus der Wirbelschichtanlage ausgetragen und außerhalb abgeschieden. Das Besondere dieser Variante sind die Trennbleche 24 zwischen den Coatingbereichen. Dadurch wird die Abluft 18 zielgerichtet geführt und gelangt als Abluft 5 aus der Anlage hinaus. Die Trennbleche 24 vermeiden eine Gasbewegung und damit eine Teilchenbewegung in Längsrichtung der Wirbelschicht 9. Die Trennbleche 24 reichen nach unten bis in den Bereich der Oberkante der Einbauteile 10 und sind über die gesamte Breite der Wirbelschicht 9 ausgebildet.

### Zusammenfassend ist also folgendes festzustellen:

Die Erfindung betrifft ein Verfahren und die dazugehörige Wirbelschichtanlage zur Herstellung von kompakten Feststoffpartikeln gemäß der im Oberbegriff der Ansprüche 1 und 5 genannten Merkmale.

Die Aufgabe der Erfindung besteht darin, ein Verfahren und die Wirbelschichtanlage zur Herstellung von kompakten Feststoffpartikeln so zu gestalten, dass entsprechend den Anwendungsfällen ein durch Aufbaugranulation oder Beschichten (Coaten) hergestelltes Endprodukt mit definierten Partikelstrukturen unter Vermeidung von Agglomerationseffekten entsteht.
Erfindungsgemäß wird das dadurch erreicht, dass
- die Wirbelschicht wenigstens einen Bereich 16 mit einer höheren Strömungsgeschwindigkeit des mit dem zu behandelnden Material beaufschlagten Luftstroms 1 aufweist,
- der Rohstoff 2 in den mit höherer Strömungsgeschwindigkeit betriebenen Bereich 16 zugeführt wird,
- das Material aus dem Bereich 16 der Wirbelschicht (9) zugeführt wird,
- dass ein Teil des Materials der Wirbelschicht 9 in den Bereich 16 wieder zugeführt wird, so dass zwischen der Wirbelschicht 9 und dem Bereich 16 eine Partikelzirkulation entsteht,
beziehungsweise dadurch, dass zur Vergleichmäßigung der Granulation und zur Erzeugung einer definierten Partikelstruktur der herzu-stellenden Feststoffpartikel im Prozessraum II der Wirbelschichtanlage über den Bereich der Düsen des Sprühsystems 13 Einbauten in Form von Einbauteilen 10 angeordnet sind, deren jeweilige untere Kante von der Oberfläche des Wirbelschichtbodens 8 beabstandet ist und deren jeweilige obere Kante in einem Abstand über der Oberfläche der Wirbelschicht 9 endet und das Öffnungsverhältnis der Gasdurchtrittsöffnungen des Wirbelschichtbodens 8 unterhalb der Einbauteile 10 größer ist als im übrigen Bereich des Wirbelschichtbodens 8.

### Aufstellung der verwendeten Bezugszeichen

- 1: Luftstrom
- 2: Rohstoff
- 3: Granulationskeime
- 4: Druckluft
- 5: Abluft
- 6: Fertigprodukt
- 7: Zuluftkammer
- 8: Wirbelschichtboden
- 9: Wirbelschicht
- 10: Einbauteil
- 11: Filter
- 12: Abreinigungsmechanismus
- 13: Sprühsystem
- 14: Zellenradschleuse
- 15: Zellenradschleuse
- 16: Bedüsungsbereich
- 17: Partikelzirkulation
- 18: Abluft
- 19: Staubrückführung
- 20: Granulataustrag
- 21: Zyklonabscheider
- 22: Zick-Zack-Sichter
- 23: Sichtluft
- 24: Trennblech

- I: Zuluftgehäuse
- II: Prozessraum
- III: Entspannungsraum
- IV: Abscheideraum

## Patentansprüche

1. Verfahren zur Herstellung von kompakten Feststoffpartikeln, insbesondere von Aufbaugranulaten in einer, in einem Prozessraum einer Wirbelschichtanlage kontinuierlich betriebenen Wirbelschicht, bei dem die Ausgangsstoffe reine Flüssigkeiten, Lösungen, Schmelzen, Feststoffe oder Gase sind, die der Wirbelschicht als Rohstoff über mehrere Sprühdüsen eines von unten in der Wirbelschicht mündenden Sprühsystems zugeführt werden, und der Wirbelschicht von unten ein Luftstrom zur Aufrechterhaltung der Wirbelschicht und zur Trocknung oder Kühlung des Wirbelschichtmaterials zugeführt werden und der Austrag des Endproduktes mit oder ohne einen klassierenden Austrag erfolgt, wobei im Prozessraum der Wirbelschichtanlage eine Anordnung von Einbauten zur Beeinflussung der Materialeigenschaften der herzustellenden Produkte vorgesehen ist, **dadurch gekennzeichnet, dass**
a) der Luftstrom über ein, in mehrere Zuluftkammern (7) unterteiltes Zuluftgehäuse (I) zugeführt wird, um eine gerichtete Strömung oder verschiedene Luftmengen einstellen zu können,
b) jeder, durch eine Zuluftkammer (7) gebildete Bereich der Wirbelschicht einen Bereich (16) mit einer höheren Strömungsgeschwindigkeit des mit dem zu behandelnden Material beaufschlagten Luftstroms (1) aufweist,
c) der Rohstoff (2) in den mit höherer Strömungsgeschwindigkeit betriebenen Bereich (16) zugeführt wird,
d) das Material aus dem Bereich (16) mit höherer Strömungsgeschwindigkeit der Wirbelschicht (9) zugeführt wird,
e) ein Teil des Materials der Wirbelschicht (9) in den Bereich (16) mit höherer Strömungsgeschwindigkeit wieder zugeführt wird, so.dass zwischen der Wirbelschicht (9) und dem Bereich (16) eine Partikelzirkulation entsteht und der andere Teil des Materials in Richtung Granulataustrag (20) transportiert wird, und
f) dass die im Prozessraum der Wirbelschichtanlage über den Bereich der Düsen des Sprühsystems vorgesehenen Einbauten in Form von in der Höhe und Breite bzw. im Durchmesser variabel einstellbaren Einbauteilen (10) angeordnet sind, deren jeweilige untere Kanten von der Oberfläche des Wirbelbodens (8) variabel einstellbar beabstandet sind, wobei zur Vergleichmäßigung der Granulation und zur Erzeugung einer definierten Partikelstruktur der herzustellenden Feststoffpartikel die Materialbildung in der Wirbelschicht und in den Einbauteilen durch Einstellung des Abstandes der Unterkante der Einbauteile vom Wirbelschichtboden, des Öffnungsverhältnisses oder Gasdurchtrittsöffnungen des unter den Einbauteilen angeordneten Wirbelschichtbodens und der Höhe und des Durchmessers bzw. der Breite der Einbauteile beeinflusst wird.

2. Verfahren nach Anspruch 1, **dadurch gekennzeichnet, dass** das in einem Abscheideraum (IV) abgeschiedene Material (19) dem Bereich (16) zugeführt wird.

3. Verfahren nach Anspruch 1 oder 2, **dadurch gekennzeichnet, dass** dem Bereich (16) Granulationskeime (3) zugeführt werden.

4. Verfahren nach einem oder mehreren vorhergehenden Ansprüchen, **dadurch gekennzeichnet, dass** die Materialzuführung in den Bereich (16) von unten und in Strömungsrichtung der Luft (1) erfolgt.

5. Wirbelschichtanlage zur Herstellung von kompakten Feststoffpartikeln, insbesondere von Aufbaugranulaten mit folgender Bauart:
einer aus Zuluftgehäuse, Prozessraum, Entspannungsraum und Abscheideraum bestehenden Wirbelschichtanlage,
einem aus einer oder mehreren Kammern bestehenden Zuluftgehäuse, an dessen Boden Zuführungen zum Eintrag eines Fluidisierungsmediums zur Aufrechterhaltung der Wirbelschicht und zur Trocknung oder Kühlung des Wirbelschichtmaterials angeordnet sind,
einem oberhalb des Zuluftgehäuses angeordneten Wirbelschichtboden, der mit Gasdurchtrittsöffnungen zur Vergleichmäßigung des Fluidisierungsmediums versehen ist,
einer oberhalb des Wirbelbodens in die Wirbelschicht einmündenden Feststoffmaterialzuführung,
einem von unten in die Wirbelschicht mündendes Sprühsystem, das aus mehreren Sprühdüsen zur Zuführung eines Rohstoffes besteht,
einer Anordnung von Einbauten im Prozessraum der Wirbelschichtanlage zur Beeinflussung der Materialeigenschaften der herzustellenden Produkte,
einem nach dem Prozessraum angeordnetem Materialaustrag für das Endprodukt, **dadurch gekennzeichnet, dass** zur Vergleichmäßigung der Granulation und zur Erzeugung einer definierten Partikelstruktur der herzustellenden Feststoffpartikel im Prozessraum (II) der Wirbelschichtanlage über den Bereich der Düsen des Sprühsystems (13) Einbauten in Form von in der Höhe und Breite bzw. im Durchmesser variabel einstellbare Einbauteilen (10) angeordnet sind, deren jeweilige untere Kanten von der Oberfläche des Wirbelbodens (8) variabel einstellbar beabstandet sind und deren jeweilige obere Kanten in einem Abstand über der Oberfläche der Wirbelschicht (9) enden und das variabel einstellbare Öffnungsverhältnis der Gasdurchtrittsöffnungen des Wirbelschichtbodens (8) unterhalb der Einbauteile (10) größer ist als im übrigen Bereich der des Wirbelbodens (8).

6. Wirbelschichtanlage nach Anspruch 5, **dadurch gekennzeichnet, dass** die Oberkante der Einbauteile (10) in den Entspannungsraum (III) der Wirbelschichtanlage ragt.

7. Wirbelschichtanlage nach Anspruch 5 und 6, **dadurch gekennzeichnet, dass** die Einbauteile (10) einen runden, rechteckigen, quadratischen oder mehreckigen Querschnitt aufweisen.

8. Wirbelschichtanlage nach Anspruch 5 bis 7, **dadurch gekennzeichnet, dass** bei einem rechteckigen Querschnitt der Einbauteile (10) mehrere über die Breite der Wirbelschicht (9) angeordnete Düsen des Sprühsystems (13) unterhalb des jeweiligen Einbauteiles (10) angeordnet sind.

9. Wirbelschichtanlage nach Anspruch 5 bis 8, **dadurch gekennzeichnet, dass** der Abstand der Unterkante der Einbauteile (10) von dem Wirbelschichtboden (8), das Öffnungsverhältnis der Gasdurchtrittsöffnungen des unter den Einbauteilen (10) angeordneten Wirbelschichtbodens (8) und die Höhe und der Durchmesser bzw. die Breite der Einbauteile (10) in Abhängigkeit von den herzustellenden Feststoffpartikeln variabel einstellbar sind.

10. Wirbelschichtanlage nach Anspruch 5 bis 9, **dadurch gekennzeichnet, dass** beim kontinuierlichen Coaten von pulverförmigen bis feinkörnigen Feststoffpartikeln an der Decke der Wirbelschichtanlage Trennbleche (24) angeordnet sind, die sich über die gesamte Breite der Wirbelschichtanlage erstrecken und in den Entspannungsraum (III) der Wirbelschichtanlage im Bereich zwischen jeweils zwei Einbauteile (10) ragen und oberhalb der Einbauteile (10) enden.

11. Wirbelschichtanlage nach Anspruch 5 bis 10, **dadurch gekennzeichnet, dass** die Staubrückführungsleitungen (19) der der Wirbelschichtanlage nachgeschalteten Zyklonabscheider (21) in einen unterhalb der Einbauteile (10) liegenden Bedüsungsbereich (16) münden.

## Claims

1. Process for producing compact solid particles, in particular agglomerated granules, in a fluidized bed operating continuously in a process chamber of a fluidized bed system, in which process the starting materials are pure liquids, solutions, melts, solids or gases, which are fed to the fluidized bed as raw material by way of a plurality of spray nozzles of a spraying system issuing into the fluidized bed from below, and an air stream is fed to the fluidized bed from below for maintaining the fluidized bed and for drying or cooling the fluidized bed material, and the end product is discharged with or without a classifying discharge, wherein an assembly of internals is provided in the process chamber of the fluidized bed system for influencing the material properties of the products to be produced, **characterized in that**
a) the air stream is fed by way of a feed air housing (I) divided into a plurality of feed air chambers (7), in order to be able to set a directional flow or various quantities of air,
b) each region of the fluidized bed formed by a feed air chamber (7) has a region (16) with a higher flow rate of the air stream (1) acted upon by the material to be treated,
c) the raw material (2) is fed into the region (16) operating at a higher flow rate,
d) the material from the region (16) with a higher flow rate is fed to the fluidized bed (9),
e) some of the material of the fluidized bed (9) is fed back into the region (16) with a higher flow rate, such that particle circulation occurs between the fluidized bed (9) and the region (16), and the rest of the material is transported in the direction of the granule discharge (20), and
f) **in that** the internals provided in the process chamber of the fluidized bed system over the region of the nozzles of the spraying system are arranged in the form of internal components (10) of variably settable height and width or diameter, the bottom edges of each of which are at a variably settable distance from the surface of the fluidizing plate (8), wherein, for the homogenization of the granulation and for the generation of a defined particle structure of the solid particles to be produced, the material formation in the fluidized bed and in the internal components is influenced by setting the distance between the bottom edge of the internal components and the fluidized bed plate, the opening ratio of the gas passage openings in the fluidized bed plate arranged below the internal components, and the height and the diameter or the width of the internal components.

2. Process according to Claim 1, **characterized in that** the material (19) deposited in a deposition chamber (IV) is fed to the region (16).

3. Process according to Claim 1 or 2, **characterized in that** granulation seeds (3) are fed to the region (16).

4. Process according to one or more of the preceding claims, **characterized in that** the material is fed into the region (16) from below and in the direction of flow of the air (1).

5. Fluidized bed system for producing compact solid particles, in particular agglomerated granules, having the following construction:
a fluidized bed system consisting of feed air housing, process chamber, expansion chamber and deposition chamber,
a feed air housing, which consists of one or more chambers and at the base of which there are arranged feed lines for introducing a fluidizing medium for maintaining the fluidized bed and for drying or cooling the fluidized bed material,
a fluidized bed plate, which is arranged above the feed air housing and which is provided with gas passage openings for the homogenization of the fluidizing medium,
a solid material feed line issuing into the fluidized bed above the fluidizing plate,
a spraying system, which issues into the fluidized bed from below and consists of a plurality of spray nozzles for feeding a raw material,
an assembly of internals in the process chamber of the fluidized bed system for influencing the material properties of the products to be produced,
a material discharge, arranged downstream of the process chamber, for the end product, **characterized in that** internals in the form of internal components (10) of variably settable height and width or diameter are arranged in the process chamber (II) of the fluidized bed system over the region of the nozzles of the spraying system (13) for the homogenization of the granulation and for the generation of a defined particle structure of the solid particles to be produced, the bottom edges of each of which internal components are at a variably settable distance from the surface of the fluidizing plate (8), and the top edges of each of which internal components end at a distance above the surface of the fluidized bed (9), and the variably settable opening ratio of the gas passage openings in the fluidized bed plate (8) underneath the internal components (10) is greater than in the rest of the region of the gas passage openings in the fluidizing plate (8).

6. Fluidized bed system according to Claim 5, **characterized in that** the top edge of the internal components (10) protrudes into the expansion chamber (III) of the fluidized bed system.

7. Fluidized bed system according to Claims 5 and 6, **characterized in that** the internal components (10) have a round, rectangular, square or polygonal cross section.

8. Fluidized bed system according to Claims 5 to 7, **characterized in that**, when the internal components (10) have a rectangular cross section, a plurality of nozzles of the spraying system (13) which are arranged over the width of the fluidized bed (9) are arranged underneath the respective internal component (10).

9. Fluidized bed system according to Claims 5 to 8, **characterized in that** the distance between the bottom edge of the internal components (10) and the fluidized bed plate (8), the opening ratio of the gas passage openings in the fluidized bed plate (8) arranged under the internal components (10) and the height and the diameter or the width of the internal components (10) are variably settable depending on the solid particles to be produced.

10. Fluidized bed system according to Claims 5 to 9, **characterized in that**, for the continuous coating of pulverulent to fine-grained solid particles, partition plates (24) are arranged on the cover of the fluidized bed system, extend over the entire width of the fluidized bed system, protrude into the expansion chamber (III) of the fluidized bed system in the region between in each case two internal components (10) and end above the internal components (10).

11. Fluidized bed system according to Claims 5 to 10, **characterized in that** the dust return lines (19) of the cyclone separators (21) arranged downstream of the fluidized bed system issue into a nozzle ejection region (16) lying underneath the internal components (10).

## Revendications

1. Procédé de fabrication de particules solides compactes, en particulier de granulés, dans un lit fluidisé fonctionnant en continu dans une chambre de procédé d'une installation à lit fluidisé, dans lequel les matériaux de départ sont des liquides purs, des solutions, des matières fondues, des matières solides ou des gaz qui sont amenés au lit fluidisé en tant que matière première par plusieurs buses de pulvérisation d'un système de pulvérisation débouchant par le bas dans le lit fluidisé, et dans lequel un courant d'air est amené par le bas au lit fluidisé pour maintenir le lit fluidisé et pour sécher ou refroidir le matériau du lit fluidisé et la décharge du produit final a lieu avec ou sans une décharge classifiante, un agencement d'inserts permettant d'influencer les propriétés de matériau des produits à fabriquer étant prévu dans la chambre de procédé de l'installation à lit fluidisé, **caractérisé en ce que**
a) le courant d'air est guidé par un boîtier d'air entrant (I) divisé en plusieurs chambres d'air entrant (7), pour pouvoir régler un écoulement dirigé ou différents débits d'air,
b) chaque zone du lit fluidisé formée par une chambre d'air entrant (7) présente une zone (16) avec une vitesse d'écoulement plus élevée du courant d'air (1) soumis au matériau à traiter,
c) la matière première (2) est amenée dans la zone (16) fonctionnant à une vitesse d'écoulement plus élevée,
d) le matériau provenant de la zone (16) à vitesse d'écoulement plus élevée est amené au lit fluidisé (9),
e) une partie du matériau du lit fluidisé (9) est ramenée dans la zone (16) à vitesse d'écoulement plus élevée, de sorte qu'il apparaît une circulation de particules entre le lit fluidisé (9) et la zone (16), et l'autre partie du matériau est transportée en direction de la décharge de granulés (20), et
f) les inserts prévus dans la chambre de procédé de l'installation à lit fluidisé au-dessus de la zone des buses du système de pulvérisation sont disposés sous la forme de pièces d'installation (10) réglables en hauteur et en largeur ou en diamètre, dont les arêtes inférieures respectives sont distantes de manière réglable de la surface du fond de lit fluidisé (8), sachant que pour homogénéiser la granulation et pour produire une structure de particules définie des particules solides à fabriquer, la formation de matériau dans le lit fluidisé et dans les pièces d'installation est influencée par réglage de la distance entre l'arête inférieure des pièces d'installation et le fond de lit fluidisé, du rapport d'ouverture des ouvertures de passage de gaz du fond de lit fluidisé disposé sous les pièces d'installation et de la hauteur et du diamètre ou de la largeur des pièces d'installation.

2. Procédé selon la revendication 1, **caractérisé en ce que** le matériau séparé (19) dans une chambre de séparation (IV) est amené à la zone (16).

3. Procédé selon la revendication 1 ou 2, **caractérisé en ce que** des germes de granulation (3) sont amenés à la zone (16).

4. Procédé selon une ou plusieurs revendications précédentes, **caractérisé en ce que** l'amenée de matériau dans la zone (16) a lieu par le bas et dans le sens d'écoulement de l'air (1).

5. Installation à lit fluidisé pour la fabrication de particules solides compactes, en particulier de granulés, présentant la forme de construction suivante :
une installation à lit fluidisé composée d'un boîtier d'air entrant, d'une chambre de procédé, d'une chambre de détente et d'une chambre de séparation,
un boîtier d'air entrant composé d'une ou plusieurs chambres, sur le fond duquel sont disposés des moyens d'amenée pour l'apport d'un milieu de fluidisation servant à maintenir le lit fluidisé et à sécher ou refroidir le matériau du lit fluidisé, un fond de lit fluidisé disposé au-dessus du boîtier d'air entrant, qui est pourvu d'ouvertures de passage de gaz pour homogénéiser le milieu de fluidisation,
une amenée de matière solide débouchant dans le lit fluidisé au-dessus du fond de lit fluidisé,
un système de pulvérisation débouchant par le bas dans le lit fluidisé, qui est composé de plusieurs buses de pulvérisation servant à amener une matière première,
un agencement d'inserts dans la chambre de procédé de l'installation à lit fluidisé pour influencer les propriétés de matériau des produits à fabriquer,
une décharge de matériau disposée après la chambre de procédé pour le produit final, **caractérisée en ce que** pour homogénéiser la granulation et pour produire une structure de particules définie des particules solides à fabriquer, des inserts sous la forme de pièces d'installation (10) réglables en hauteur et en largeur ou en diamètre sont disposés dans la chambre de procédé (II) de l'installation à lit fluidisé au-dessus de la zone des buses du système de pulvérisation (13), dont les arêtes inférieures respectives sont distantes de manière réglable de la surface du fond de lit fluidisé (8) et dont les arêtes supérieures respectives se terminent à une certaine distance au-dessus de la surface du lit fluidisé (9) et le rapport d'ouverture réglable des ouvertures de passage de gaz du fond de lit fluidisé (8) est plus grand sous les pièces d'installation (10) que dans la zone restante du fond de lit fluidisé (8).

6. Installation à lit fluidisé selon la revendication 5, **caractérisée en ce que** l'arête supérieure des pièces d'installation (10) fait saillie dans la chambre de détente (III) de l'installation à lit fluidisé.

7. Installation à lit fluidisé selon les revendications 5 et 6, **caractérisée en ce que** les pièces d'installation (10) présentent une section ronde, rectangulaire, carrée ou polygonale.

8. Installation à lit fluidisé selon les revendications 5 à 7, **caractérisée en ce que** dans le cas d'une section rectangulaire des pièces d'installation (10), plusieurs buses du système de pulvérisation (13) disposées sur la largeur du lit fluidisé (9) sont disposées au-dessous de la pièce d'installation (10) respective.

9. Installation à lit fluidisé selon les revendications 5 à 8, **caractérisée en ce que** la distance entre l'arête inférieure des pièces d'installation (10) et le fond de lit fluidisé (8), le rapport d'ouverture des ouvertures de passage de gaz du fond de lit fluidisé (8) disposé sous les pièces d'installation (10) et la hauteur et le diamètre ou la largeur des pièces d'installation (10) sont réglables en fonction des particules solides à fabriquer.

10. Installation à lit fluidisé selon les revendications 5 à 9, **caractérisée en ce que** lors du revêtement continu de particules solides sous forme de poudre ou de grains fins, des tôles de séparation (24) sont disposées au plafond de l'installation à lit fluidisé, lesquelles s'étendent sur toute la largeur de l'installation à lit fluidisé, font saillie dans la chambre de détente (III) de l'installation à lit fluidisé dans la zone comprise entre chaque fois deux pièces d'installation (10) et se terminent au-dessus des pièces d'installation (10).

11. Installation à lit fluidisé selon les revendications 5 à 10, **caractérisée en ce que** les conduites de retour de poussières (19) du séparateur à cyclone (21) placé à la suite de l'installation à lit fluidisé débouchent dans une zone de pulvérisation (16) située sous les pièces d'installation (10).
